(19) **Europäisches Patentamt European Patent Office Office européen des brevets**

(11) **EP 3 913 348 B1**

(12) **FASCICULE DE BREVET EUROPEEN**

(45) Date de publication et mention de la délivrance du brevet:
**27.08.2025 Bulletin 2025/35**

(21) Numéro de dépôt: **21163255.9**

(22) Date de dépôt: **17.03.2021**

(51) Classification Internationale des Brevets (IPC):
**B64C 27/12** *(2006.01)* **B64D 35/00** *(2006.01)*
**B64D 45/00** *(2006.01)* **F02C 6/02** *(2006.01)*
**G01M 13/022** *(2019.01)* **G01M 13/028** *(2019.01)*

(52) Classification Coopérative des Brevets (CPC):
**G01M 13/028; B64C 27/12; B64D 35/00; B64D 45/00; F02C 6/02; G01M 13/022;**
B64D 2045/0085; F05D 2220/329; F05D 2230/72; F05D 2260/80; F05D 2260/83; F05D 2270/304; F05D 2270/334; F05D 2270/335

(54) **SYSTÈME ET PROCÉDÉ DE SURVEILLANCE DE L'USURE D'UNE ROUE LIBRE ET APPAREIL ASSOCIÉ**

SYSTEM UND VERFAHREN ZUR ÜBERWACHUNG DES VERSCHLEISSES EINES FREILAUFS UND ENTSPRECHENDES GERÄT

SYSTEM AND METHOD FOR MONITORING THE WEAR OF A FREE WHEEL AND ASSOCIATED DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.05.2020 FR 2005185**

(43) Date de publication de la demande:
**24.11.2021 Bulletin 2021/47**

(73) Titulaire: **Airbus Helicopters**
**13725 Marignane Cedex (FR)**

(72) Inventeur: **BELHABIB, Gilles**
**13090 AIX EN PROVENCE (FR)**

(74) Mandataire: **GPI Brevets**
**1330, rue Guillibert de la Lauzière EuroParc de Pichaury Bât B2 13856 Aix en Provence Cedex 3 (FR)**

(56) Documents cités:
**US-A1- 2015 367 951**

- **ANONYMOUS: "USAAMRDL-TR-77-18 HELICOPTER FREEWHEEL UNIT DESIGN GUIDE", 31 October 1977 (1977-10-31), pages 1 - 240, XP055773387, Retrieved from the Internet <URL:https://apps.dtic.mil/dtic/tr/fulltext/u2/a047559.pdf> [retrieved on 20210208]**

**Description**

La présente invention concerne un système et un procédé de surveillance de l'usure d'une roue libre, et un appareil comprenant un aéronef et ce système.

Classiquement, un aéronef à voilure tournante comporte un rotor assurant au moins partiellement la sustentation de l'aéronef. Ce rotor peut aussi participer au moins partiellement à la propulsion de l'aéronef. Ainsi, un hélicoptère comporte un rotor principal assurant sa sustentation et sa propulsion.

Ce rotor est mû en rotation par une installation motrice comportant au moins un moteur et une boîte de transmission de puissance mise en mouvement par le ou les moteurs.

Par ailleurs, l'installation motrice peut comporter au moins une roue libre munie d'une partie menante reliée au moteur et d'une partie menée reliée au rotor. La roue libre peut être agencée au sein d'un moteur, ou au sein de la boîte de transmission de puissance voire au sein d'une chaîne mécanique reliant un moteur à la boîte de transmission de puissance. Par exemple, la boîte de transmission de puissance peut comprendre un système d'entrée mécanique de transmission de couple par moteur, chaque système d'entrée mécanique de transmission de couple incluant une roue libre.

Une roue libre est susceptible de se dégrader au cours de son utilisation. Dès lors, les roues libres sont remplacées avant d'atteindre un niveau d'usure prononcé. Le niveau d'usure prononcé représente par exemple un niveau d'usure rendant la roue libre défaillante, et par exemple glissante.

Les roues libres en tant que telles sont inspectées lors de maintenances programmées pour être remplacées avant d'être défaillantes. Lorsqu'une roue libre est agencée dans une boîte de transmission de puissance, une action de maintenance de la boîte de transmission de puissance est planifiée pour inspecter la roue libre et la remplacer si son usure est supérieure à un seuil d'usure prédéterminé. Une telle action de maintenance nécessite de démonter la boîte de transmission de puissance pour inspecter la roue libre et la remplacer si nécessaire. Une telle action de maintenance s'avère de fait relativement complexe.

Le document FR 3049036 décrit un procédé visant à identifier si une roue libre est défaillante. L'état de fonctionnement de la roue libre est considéré incorrect si la vitesse de rotation d'un arbre d'entrée n'appartient pas à une deuxième plage de valeurs lorsque la vitesse de rotation du rotor appartient à une première plage de valeurs.

Cet enseignement est intéressant en permettant de détecter la présence d'une roue libre défaillante mais n'a pas pour but d'évaluer un niveau d'usure de la roue libre pour réaliser une action de maintenance avant défaillance de cette roue libre.

Le document EP 3473805 est éloigné de la problématique de l'évaluation de l'usure d'une roue libre en ayant trait à la torsion d'un arbre. Ce document décrit un système muni d'un arbre équipé d'une roue phonique et d'un senseur coopérant avec la roue phonique. Une unité de traitement est couplée au senseur pour déterminer un mode de vibrations en torsion de l'arbre sur la base de la mesure réalisée.

Le document WO 95/27183 est aussi éloigné de la problématique de l'évaluation de l'usure d'une roue libre en ayant trait à une méthode pour déterminer une fréquence de résonance d'un organe d'un moteur.

Le document US 2015/367951 décrit un système de surveillance qui comporte un premier dispositif de mesure pour mesurer le couple exercé sur la portion amont d'une chaine de transmission de puissance et un deuxième dispositif de mesure pour mesurer une vitesse de rotation d'un générateur de gaz. Le système de surveillance possède en outre une unité de traitement reliée au turbomoteur ainsi qu'au premier dispositif de mesure et au deuxième dispositif de mesure pour arrêter automatiquement le turbomoteur lorsque conjointement le couple est inférieur à un seuil de couple et lorsque ladite vitesse de rotation du générateur de gaz est supérieure à un seuil de vitesse.

Le document USAAMRDL-TR-77-18 HELICOPTER FREEWHEEL UNIT DESIGN GUIDE", 31 octobre 1977 (1977-10-31), pages 1-240, XP055773387 est aussi connu.

La présente invention a alors pour objet de proposer un procédé de détection d'une usure avant défaillance d'une roue libre d'un système mécanique selon la revendication 1 et un système de surveillance pour détecter une usure avant défaillance d'une roue libre d'un système mécanique selon la revendication 15, où ledit système mécanique est muni d'une partie tournante, ladite roue libre comprenant une partie menante intégrée à une chaîne mécanique de transmission de puissance amont reliée à un moteur, ladite roue libre comprenant une partie menée intégrée à une chaine mécanique de transmission de puissance aval reliée au moins à la partie tournante. Ce système mécanique est par exemple un aéronef.

Ce procédé comporte les étapes suivantes lors d'une phase d'analyse :

- détermination, par exemple sur une période de temps, d'une mesure d'oscillation variant en fonction du temps d'un premier paramètre de surveillance au sein de la chaîne mécanique de transmission de puissance amont ou aval en utilisant au moins un premier dispositif de mesure,

- détermination d'une valeur d'au moins un paramètre dynamique, avec un calculateur de traitement, ledit au moins un paramètre dynamique étant une caractéristique de la mesure d'oscillation dans un repère temporel ou une caractéristique d'une transformée de la mesure d'oscillation dans un repère fréquentiel,

- génération avec un alerteur, en communication avec le calculateur de traitement, d'une alarme lorsque ladite valeur dudit au moins un paramètre dynamique atteint au moins un seuil d'usure associé audit paramètre dynamique et stocké dans le calculateur de traitement.

L'expression « atteint au moins un seuil d'usure » signifie que le paramètre dynamique associé présente une valeur qui devient égale au seuil d'usure voire le dépasse, soit en étant supérieure ou égal à ce seuil d'usure lorsque le seuil d'usure est une limite haute soit en étant inférieure ou égal à ce seuil d'usure lorsque le seuil d'usure est une limite basse. Selon un exemple, le paramètre dynamique peut se trouver dans des conditions normales dans une plage de valeurs délimitée par deux seuils d'usure. Dès que le paramètre dynamique sort de cette plage alors l'alarme est générée.

Une roue libre est dite « engagée » ou « synchronisée » lorsque sa partie menante entraîne en rotation sa partie menée. A l'inverse, si la vitesse de rotation de la partie menée est supérieure à la vitesse de rotation de la partie menante, la roue libre est dite « désengagée » ou « désynchronisée ».

La roue libre peut être engagée à divers moments, par exemple au démarrage du moteur, après un redémarrage ou encore suite à une phase d'autorotation. Lorsque la roue libre passe d'un mode de fonctionnement désengagé à un mode de fonctionnement engagé, le premier paramètre de surveillance a une valeur qui tend à osciller durant une période de temps. La forme de cette oscillation dépend des propriétés mécaniques de la roue libre et par conséquent de son niveau d'usure.

Par suite, selon le procédé de l'invention, durant une phase d'analyse un capteur acquiert un premier signal de mesure, le premier signal de mesure étant porteur de la valeur du premier paramètre de surveillance dans la chaîne mécanique de transmission de puissance amont ou aval.

Ainsi, le premier dispositif de mesure émet un premier signal de mesure porteur d'une valeur relative au premier paramètre de surveillance, et par exemple une tension électrique image du premier paramètre de surveillance. Ce premier signal de mesure peut être la mesure d'oscillation ou peut être traité par le calculateur de traitement pour obtenir la mesure d'oscillation. Dès lors soit le calculateur de traitement reçoit un premier signal de mesure formant la mesure d'oscillation soit le calculateur de traitement traite ce premier signal de mesure pour obtenir la mesure d'oscillation.

Dans un repère temporel présentant en ordonnée le premier paramètre de surveillance et en abscisse le temps ou dans un repère fréquentiel, la mesure oscillante décrit une fonction qui présente au moins un paramètre dynamique image de l'usure de la roue libre. Chaque paramètre dynamique est une caractéristique de la mesure d'oscillation dans le repère temporel ou d'une transformée de la mesure d'oscillation dans un repère fréquentiel.

Dès lors, le calculateur de traitement peut comparer chaque paramètre dynamique à au moins un seuil d'usure prédéterminé qui lui est propre. Chaque seuil d'usure peut être déterminé par calculs ou par essais avec une roue libre présentant une usure acceptable mais devant faire l'objet d'une opération de maintenance. Par exemple, on détermine une mesure d'oscillation avec une telle roue libre usée de façon acceptable, la valeur du paramètre dynamique obtenue avec cette mesure d'oscillation représentant ledit seuil d'usure.

Si au moins un paramètre dynamique a une valeur qui atteint la valeur de son seuil d'usure, une alarme est émise pour qu'une action de maintenance soit réalisée. Un opérateur pourra alors déterminer si la roue libre est effectivement usée.

Ce procédé tend à requérir l'inspection détaillée de la roue libre avant défaillance et uniquement quand cette roue libre est jugée usée ou possiblement usée, contrairement à un procédé prévoyant une maintenance préventive ou un procédé surveillant une éventuelle défaillance.

Le procédé peut être en tout ou partie réalisé au sein du système mécanique à surveiller, par exemple un véhicule et notamment un aéronef. De même, le calculateur de traitement peut comprendre un ou plusieurs calculateurs embarqués ou non dans le système mécanique à surveiller.

Eventuellement, le procédé peut être mis en œuvre avec des dispositifs présents sur certains aéronefs.

Ce procédé peut être appliqué indépendamment sur chaque roue libre, par exemple au sein d'une installation comprenant plusieurs moteurs coopérant chacun avec une roue libre.

Le procédé peut de plus comporter une ou plusieurs des caractéristiques qui suivent.

Selon l'invention, ledit au moins un seuil d'usure peut être un seuil atteint lorsque ladite roue libre est usée et non glissante.

Le seuil d'usure d'un paramètre dynamique peut être calculé pour garantir que la roue libre puisse effectuer un vol complet dans les conditions les plus défavorables sans défaillir. Ainsi, si le seuil d'usure est atteint en début de vol, l'intégralité de la mission peut être réalisée de manière sécurisée.

Selon un autre aspect compatible avec l'aspect précédent, le premier paramètre de surveillance peut être un paramètre physique de type vitesse de rotation, position angulaire, accélération angulaire, couple mécanique ou contrainte mécanique.

La mesure d'oscillation peut être obtenue à partir d'une variation de la vitesse de rotation d'un organe de la chaîne mécanique de transmission de puissance amont ou aval, voire d'une différence de vitesses de rotation entre un organe de la chaîne mécanique de transmission de puissance amont et un organe de la chaîne mécanique de transmission de puissance aval.

Alternativement, la mesure d'oscillation peut résulter d'une variation d'une position angulaire par rapport à une référence ou d'une accélération angulaire d'un organe de la chaîne mécanique de transmission de puissance amont ou aval, voire d'une différence de positions angulaires par rapport à une référence ou d'accélérations angulaires entre un organe de la chaîne mécanique de transmission de puissance amont et un organe de la chaîne mécanique de transmission de puissance aval.

Alternativement, la mesure d'oscillation peut résulter d'une variation d'un couple mécanique exercé sur un organe de la chaîne mécanique de transmission de puissance amont ou aval, voire d'une différence de couples mécaniques entre un organe de la chaîne mécanique de transmission de puissance amont et un organe de la chaîne mécanique de transmission de puissance aval.

Alternativement, la mesure d'oscillation peut résulter d'une variation d'une contrainte mécanique exercée sur un organe de la chaîne mécanique de transmission de puissance amont ou aval, voire d'une différence entre une contrainte, par exemple en cisaillement, exercée sur la chaîne mécanique de transmission de puissance amont et une contrainte mécanique d'un même genre exercée sur la chaîne mécanique de transmission de puissance aval.

Selon un autre aspect compatible avec les aspects précédents, le procédé peut comporter une étape de mesure de ladite valeur du premier paramètre de surveillance au sein de la chaîne mécanique de transmission de puissance amont ou aval.

Selon une méthode permettant de filtrer la mesure de ladite valeur du paramètre de surveillance au sein de la chaîne mécanique de transmission de puissance amont, le procédé peut aussi comporter une étape de mesure d'une valeur d'un deuxième paramètre de surveillance au sein de la chaîne mécanique de transmission de puissance amont ou aval ne faisant pas l'objet du premier paramètre de surveillance. Le premier paramètre de surveillance et le deuxième paramètre de surveillance sont relatifs à un même paramètre physique et donc par exemple tous deux relatifs à une vitesse de rotation ou tous deux relatifs à un couple mécanique ou tous deux relatifs à une contrainte mécanique, ou à une position angulaire ou à une accélération angulaire.

Par exemple, la première mesure de la valeur du premier paramètre de surveillance au sein de la chaîne mécanique de transmission de puissance amont peut être réalisée sur un arbre moteur et le cas échéant la deuxième mesure de la valeur du deuxième paramètre de surveillance au sein de la chaîne mécanique de transmission de puissance aval peut être réalisée sur un mât rotor. Néanmoins, les mesures peuvent être réalisées au niveau d'autres points de mesure tels que par exemple un tronçon de la chaîne mécanique de transmission de puissance aval débouchant sur un autre organe que la voilure tournante et par exemple sur un boîtier accessoires ou un rotor de contrôle du mouvement en lacet...

Les mesures sont favorablement réalisées au plus près de la roue libre pour une meilleure sensibilité.

Dès lors, la mesure d'oscillation peut être obtenue à l'aide d'un premier signal de mesure émis par le premier dispositif de mesure. Le premier signal de mesure peut être brut ou traité en sollicitant un deuxième signal de mesure provenant du deuxième dispositif de mesure voire par échantillonnage.

Les paragraphes suivants illustrent diverses manières d'obtenir la mesure d'oscillation.

Selon un exemple, la détermination d'une mesure d'oscillation comporte l'élaboration d'un premier signal de mesure par rapport au temps avec le premier dispositif de mesure, ladite mesure d'oscillation étant :

- soit une courbe continue par rapport au temps correspondant au premier signal de mesure non filtré,

- soit une courbe continue par rapport au temps correspondant au premier signal de mesure filtré au moins par soustraction d'un deuxième signal de mesure généré par un deuxième dispositif de mesure mesurant un deuxième paramètre de surveillance au sein de la chaîne mécanique de transmission de puissance amont ou aval ne faisant pas l'objet du premier paramètre de surveillance, le premier paramètre de surveillance et le deuxième paramètre de surveillance étant relatifs à un même paramètre physique.

Selon un exemple ladite détermination d'une mesure d'oscillation comporte les étapes suivantes :

- élaboration d'un premier signal de mesure par rapport au temps avec le premier dispositif de mesure, le premier signal de mesure étant non filtré ou filtré au moins par soustraction d'un deuxième signal de mesure par rapport au temps généré par un deuxième dispositif de mesure mesurant un deuxième paramètre de surveillance au sein de la chaîne mécanique de transmission de puissance amont ou aval ne faisant pas l'objet du premier paramètre de surveillance, le premier paramètre de surveillance et le deuxième paramètre de surveillance étant relatifs à un même paramètre physique,

- génération d'une pluralité de points de mesure par rapport au temps par échantillonnage dudit premier signal de mesure filtré ou non filtré, ladite mesure d'oscillation étant une courbe oscillante discontinue par rapport au temps comprenant lesdits points de mesure.

Chaque étape d'échantillonnage décrite précédemment ou par la suite peut comporter une étape de segmentation du signal concerné selon une fréquence d'échantillonnage, voire une étape de conversion de la grandeur physique faisant l'objet du signal dans la grandeur physique du paramètre de surveillance. Par exemple, le premier signal de mesure représente une tension électrique, le premier signal de mesure étant segmenté puis chaque point obtenu est transformé en une vitesse angulaire.

Selon un exemple, ladite détermination d'une mesure d'oscillation comporte les étapes suivantes :

- élaboration d'un premier signal de mesure par rapport au temps avec le premier dispositif de mesure,

- génération d'une pluralité de premiers points intermédiaires par échantillonnage dudit premier signal de mesure,

- élaboration d'un deuxième signal de mesure avec un deuxième dispositif de mesure mesurant un deuxième paramètre de surveillance au sein de la chaîne mécanique de transmission de puissance amont ou aval ne faisant pas l'objet du premier paramètre de surveillance, le premier paramètre de surveillance et le deuxième paramètre de surveillance étant relatifs à un même paramètre physique,

- génération d'une pluralité de deuxièmes points intermédiaires par échantillonnage dudit deuxième signal de mesure,

- génération d'une pluralité de points de mesure par soustraction des premiers points intermédiaires et des deuxièmes points intermédiaires, ladite mesure d'oscillation étant une courbe oscillante discontinue par rapport au temps comprenant lesdits points de mesure.

Par ailleurs, au moins un paramètre dynamique peut prendre une des formes suivantes.

Selon un autre aspect compatible avec les aspects précédents, ledit au moins un paramètre dynamique peut comporter une pseudopulsation omg de ladite mesure d'oscillation, ledit au moins un seuil d'usure associé étant un seuil de pseudo-pulsation.

Selon un autre aspect compatible avec les aspects précédents, ledit au moins un paramètre dynamique peut comporter un coefficient d'amortissement de ladite mesure d'oscillation, ledit au moins un seuil d'usure associé étant un seuil d'amortissement.

Eventuellement, un ou les deux paramètres dynamiques précédents, voire d'autres paramètres sont utilisés.

Selon un autre aspect compatible avec les aspects précédents, ladite étape de détermination d'une valeur d'au moins un paramètre dynamique dans ledit repère temporel comporte l'étape suivante : ajustement d'une valeur dudit au moins un paramètre dynamique au sein d'une fonction mathématique stockée dans le calculateur de traitement, et le cas échéant des paramètres d'usure, pour que ladite fonction mathématique soit séparée d'une fonction décrite par la mesure d'oscillation par un espace inférieur à un seuil.

Selon cette méthode, une fonction mathématique prédéterminée est mémorisée et comporte un ou plusieurs coefficients représentant chacun un paramètre dynamique. Dès lors, le calculateur de traitement fait varier la valeur de chaque coefficient pour que la fonction prédéterminée soit sensiblement superposable, à une marge près, à la mesure d'oscillation. Eventuellement, le procédé peut prévoir d'ignorer un nombre de points de mesure maximum pour prendre en compte des éventuelles erreurs de mesure.

Par exemple et comme indiqué précédemment, le premier paramètre de surveillance peut être une vitesse de rotation. La fonction mathématique peut alors avoir la forme suivante :

$$V=X*(-L*exp(-L*t)*cos(omg*t+phi)-omg*exp(-L*t)*sin(omg*t+phi))$$

où « V » représente une vitesse en ordonnée dans un diagramme présentant le temps t en abscisse, « t » représente le temps, « X » représente une amplitude, « L » représente un paramètre dynamique de type coefficient d'amortissement, « omg » représente un paramètre dynamique de type pseudo-pulsation, « phi » représente une phase, « exp » représente la fonction exponentielle, « cos » représente la fonction cosinus, « sin » représente la fonction sinus, « = » représente le signe de l'égalité, « * » représente le signe de la multiplication, « + » représente le signe de l'addition, « - » représente le signe de la soustraction.

Alternativement, ladite détermination d'une valeur d'au moins un paramètre dynamique dans ledit repère fréquentiel comporte l'étape suivante : identification d'une valeur dudit au moins un paramètre dynamique de ladite transformée de la mesure d'oscillation dans un repère fréquentiel.

La mesure d'oscillation peut être exprimée dans le repère temporel. Dès lors, la mesure d'oscillation peut être exprimée dans le repère fréquentiel par une fonction obtenue en transformant la mesure d'oscillation par une analyse spectrale ou par une transformée de Fourier rapide ou discrète par exemple, ou autres...

Par exemple, lorsque la fonction, décrite par la mesure d'oscillation, dans le repère fréquentiel fournit une densité d'amplitude par rapport à des fréquences, ladite détermination d'une valeur d'au moins un paramètre dynamique comporte la détermination au moins d'une fréquence ou d'une densité d'amplitude d'une raie spectrale prédéterminée de ladite transformée de la mesure d'oscillation dans un repère fréquentiel , ledit au moins un paramètre dynamique étant ladite fréquence ou ladite densité d'amplitude.

Selon un autre aspect compatible avec les aspects précédents, ledit procédé peut comporter une étape de détermination d'une période d'engagement de la roue libre durant laquelle la partie menante commence à entraîner la partie menée, ladite phase d'analyse étant initiée lors de ladite période d'engagement.

Par exemple, cette phase d'analyse peut être initiée lorsqu'une vitesse de rotation de la partie menante est égale à une vitesse de rotation de la partie menée, à une deuxième marge prédéterminée près.

Cette condition peut être évaluée par exemple en comparant la vitesse de rotation d'un organe de la chaîne mécanique de transmission de puissance amont à la vitesse de rotation d'un organe de la chaîne mécanique de transmission de puissance aval.

Le calculateur de traitement peut ainsi détecter un instant correspondant à l'engagement ou à l'engagement à venir à court terme de la roue libre et uniquement réaliser la phase d'analyse dans un intervalle de temps partant de cet instant ou juste après, à savoir au point de mesure suivant l'engagement, par exemple pour ne pas monopoliser inutilement des ressources de calcul.

Par exemple, les valeurs du premier paramètre de surveillance et le cas échéant du deuxième paramètre de surveillance sont analysées sensiblement à partir de cet instant et éventuellement durant une période de temps et par exemple soit pendant une durée prédéterminée, soit jusqu'à ce que ces valeurs soient sensiblement égales pendant un temps prédéterminé pour faciliter les calculs.

A l'issue de cette période de temps, le calculateur de traitement compile les mesures et détermine la valeur de chaque paramètre dynamique pour comparaison à au moins un seuil d'usure correspondant.

Selon un autre aspect compatible avec les aspects précédents, le procédé peut comporter une étape de détermination d'une durée de vie restante de ladite roue libre en fonction d'une différence entre ladite valeur dudit au moins un paramètre dynamique et ledit au moins un seuil d'usure associé.

Le procédé peut ainsi être prédictif d'une durée de vie et d'une opération de maintenance.

Par exemple, le calculateur de traitement comporte pour chaque paramètre dynamique une loi fournissant une durée de vie en fonction de l'écart séparant la valeur de ce paramètre dynamique et un seuil d'usure correspondant. Une telle loi est par exemple établie par essais à l'aide de plusieurs roues libres différentes présentant des usures différentes. En présence de plusieurs paramètres d'usure, la durée de vie la plus faible ainsi déterminée est affectée à la roue libre. Si la durée de vie est négative, l'alarme précédemment évoquée est émise. Par exemple, la durée de vie calculée est affichée et/ou mémorisée. Selon une possibilité, l'émission d'une alarme consiste à signaler une durée de vie nulle ou négative via des moyens existants.

Outre un procédé, l'invention vise un système appliquant ce procédé et donc un système de surveillance pour notamment détecter une usure avant défaillance d'une roue libre d'un système mécanique, ledit système mécanique étant muni d'une partie tournante, ladite roue libre comprenant une partie menante intégrée à une chaîne mécanique de transmission de puissance amont reliée à un moteur, ladite roue libre comprenant une partie menée intégrée à une chaîne mécanique de transmission de puissance aval reliée au moins à la partie tournante.

Ce système de surveillance est configuré pour appliquer le procédé de l'invention, le système de surveillance comportant un premier dispositif de mesure pour mesurer ledit premier paramètre de surveillance au sein de la chaîne mécanique de transmission de puissance amont ou aval en position de montage, ledit système de surveillance ayant ledit calculateur de traitement relié en position de montage audit alerteur ainsi qu'au premier dispositif de mesure.

L'expression « en position de montage » fait référence à l'installation de l'organe concerné, éventuellement temporaire, au sein du système mécanique.

Eventuellement, ce système de surveillance peut comporter un deuxième dispositif de mesure pour mesurer en position de montage un deuxième paramètre de surveillance au sein de la chaîne mécanique de transmission de puissance amont ou aval ne faisant pas l'objet du premier paramètre de surveillance, ledit calculateur de traitement étant relié en position de montage audit deuxième dispositif de mesure.

Eventuellement, le premier dispositif de mesure et le cas échéant le deuxième dispositif de mesure peuvent comporter chacun un capteur de vitesse ou un capteur de position voire un dérivateur ou un capteur d'accélération voire un intégrateur. Par exemple, un capteur de vitesse comporte une roue codeuse coopérant avec un senseur usuel.

Alternativement, le premier dispositif de mesure et, le cas échéant, le deuxième dispositif de mesure peuvent comporter chacun un couplemètre ou une jauge de contrainte.

Le calculateur de traitement peut comporter un ou plusieurs calculateurs configurés pour être embarqués ou non dans le système mécanique.

L'alerteur peut comprendre un organe usuel pour émettre une alarme visuelle, tel qu'une diode ou un écran par exemple, une alarme sonore, telle qu'un haut parleur par exemple, et/ou une alarme vibratoire ou tactile, tel qu'un dispositif haptique par exemple,...

L'invention vise aussi un appareil comprenant un aéronef muni d'une partie tournante et d'au moins une roue libre, ladite roue libre comprenant une partie menante intégrée à une chaîne mécanique de transmission de puissance amont reliée à un moteur, ladite roue libre comprenant une partie menée intégrée à une chaîne mécanique de transmission de puissance aval reliée au moins à la partie tournante. Cet appareil est en outre muni d'un système de surveillance selon l'invention. Par exemple, la partie tournante est un rotor, d'une voilure tournante ou de contrôle du mouvement de l'aéronef par exemple.

Selon une option, le calculateur de traitement est embarqué dans l'aéronef. Le calculateur de traitement peut comporter un ou plusieurs calculateurs qui sont tous embarqués dans l'aéronef.

De même, l'alerteur peut être embarqué dans l'aéronef ou non embarqué.

Selon une option, le calculateur de traitement peut comporter :

- un premier calculateur embarqué dans ledit aéronef, le premier calculateur étant relié au premier dispositif de mesure et le cas échéant au deuxième dispositif de mesure et étant configuré pour réaliser éventuellement ladite détermination d'une mesure d'oscillation et ladite détermination d'une valeur d'au moins un paramètre dynamique,

- un deuxième calculateur non embarqué dans l'aéronef communiquant avec le premier calculateur et l'alerteur, ledit deuxième calculateur étant configuré pour réaliser ladite génération d'une alarme lorsque ladite valeur dudit au moins un paramètre dynamique atteint au moins un seuil d'usure associé audit au moins un paramètre dynamique et stocké dans le calculateur de traitement.

L'alerteur peut être non embarqué.

Le premier calculateur peut comprendre un unique calculateur ou plusieurs calculateurs.

Par exemple, un système connu sous l'acronyme FADEC correspondant à l'expression anglaise « Full Authority Digital Engine Control » peut comporter un calculateur et un capteur pour déterminer la vitesse de rotation d'un moteur, voire un capteur pour mesurer la vitesse de rotation d'un mât rotor. Les capteurs utilisés par un système FADEC présentent l'avantage d'avoir une fiabilité maximisée et d'être munis de dispositifs permettant de s'affranchir des pannes dormantes ce qui peut tendre à obtenir un système de détermination de l'usure d'une roue libre fiable. Un calculateur d'un système connu sous l'acronyme HUMS pour l'expression anglaise « Health and Usage Monitoring Systems » peut compiler les mesures de vitesse de rotation du moteur, voire du mât rotor pour établir la mesure d'oscillation.

Dans une architecture toute embarquée, le calculateur du système HUMS ou un autre calculateur embarqué peut en déduire la présence d'une usure impliquant une action de maintenance.

Dans une architecture partiellement déportée, un deuxième calculateur peut communiquer avec le premier calculateur, et par exemple un calculateur d'un système HUMS, soit directement par des liaisons filaires ou non filaires, soit via des dispositifs de stockage de données mobiles. Par exemple, un disque dur ou un équivalent est connecté au premier calculateur pour stocker la valeur de chaque paramètre dynamique, voire la mesure d'oscillation, puis est connecté au deuxième calculateur pour poursuivre le procédé.

Selon un exemple, le système de surveillance d'une roue libre comporte deux capteurs de vitesse de rotation d'un moteur et d'un rotor, un calculateur d'un système FADEC qui calcule les vitesses de rotation du moteur et du rotor à partir des données transmises par les capteurs de vitesse, un calculateur d'un système HUMS qui établit la mesure d'oscillation et calcule la valeur de chaque paramètre dynamique et un calculateur d'une station sol qui permet de comparer chaque paramètre dynamique à son seuil d'usure pour générer si besoin une alarme.

Selon une option, ni le calculateur de traitement ni l'alerteur, voire ni le ou les dispositifs de mesure n'appartiennent au système à surveiller et par exemple à un aéronef.

L'invention et ses avantages apparaîtront avec plus de détails dans le cadre de la description qui suit avec des exemples donnés à titre illustratif en référence aux figures annexées qui représentent :

la figure 1, un exemple de système mécanique comprenant un système de surveillance selon l'invention,

la figure 2, un exemple d'aéronef comprenant un système de surveillance selon l'invention,

la figure 3, un exemple d'aéronef comprenant un système de surveillance selon l'invention,

la figure 4, un logigramme illustrant le procédé de l'invention,

la figure 5, un diagramme illustrant une phase d'engagement d'une roue libre,

la figure 6, un diagramme illustrant une mesure d'oscillation correspondant au premier signal de mesure non filtré et non traité,

la figure 7, un diagramme illustrant un deuxième signal de mesure,

la figure 8, un diagramme illustrant une mesure d'oscillation obtenue par soustraction du premier signal de mesure de la figure 6 et du deuxième signal de mesure de la figure 7,

la figure 9, un diagramme illustrant la mesure d'oscillation de la figure 6 transformée par une transformée de Fourier,

la figure 10, un diagramme illustrant la mesure d'oscillation de la figure 8 transformée par une transformée de Fourier.

Les éléments présents dans plusieurs figures distinctes sont affectés d'une seule et même référence.

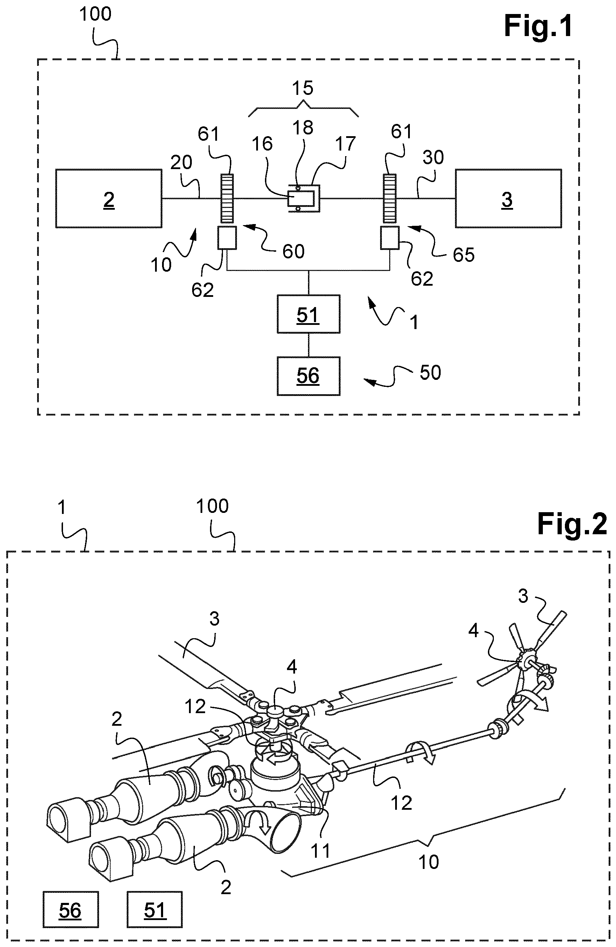

La figure 1 présente un appareil 100 comprenant un système mécanique 1 qui comporte une partie tournante 3.

Pour mettre en rotation la partie tournante 3, le système mécanique 1 comporte une installation motrice. Cette installation motrice possède au moins un moteur 2 relié par un système mécanique de transmission de puissance 10 au moins à la partie tournante 3.

Par ailleurs, le système mécanique de transmission de puissance 10 comporte au moins une roue libre 15 par moteur, chaque roue libre 15 étant interposée mécaniquement entre un organe tournant du moteur 2 et la partie tournante 3.

Quel que soit le nombre de roue(s) libre(s) 15, chaque roue libre 15 comprend une partie menante 16 et une partie menée 17. Des pièces de liaison 18 usuelles, tels que des galets roulant sur des rampes par exemple, lient en rotation la partie menante 16 et la partie menée 17 lorsque la partie menante 16 tend à tourner plus vite que la partie menée 17. Par contre, lorsque la partie menée 17 tourne plus vite que la partie menante 16, lesdites pièces de liaison désolidarisent en rotation la partie menante 16 et la partie menée 17. Dès lors, le système mécanique de transmission de puissance 10 comporte une chaîne mécanique de transmission de puissance amont 20 qui inclut la partie menante 16 et s'étend jusqu'à un organe du moteur 2, voire même au sein du moteur 2.

De même, le système mécanique de transmission de puissance 10 comporte une chaîne mécanique de transmission de puissance aval 30 qui inclut la partie menée 17 et s'étend jusqu'à la partie tournante 3, et éventuellement jusqu'à d'autres éléments tournants.

Selon un autre aspect, un système de surveillance 50 est configuré pour mettre en œuvre le procédé selon l'invention décrit par la suite.

Ce système de surveillance 50 peut comprendre un premier dispositif de mesure 60 par roue libre pour mesurer une valeur d'un premier paramètre de surveillance au niveau de la chaîne mécanique de transmission de puissance amont 20 ou aval 30, et au sein de la chaîne mécanique de transmission de puissance amont 20 selon les exemples illustrés. Le système de surveillance 50 peut comprendre un deuxième dispositif de mesure 65 pour mesurer la valeur de ce même paramètre de surveillance au niveau de la chaîne mécanique de transmission de puissance amont 20 ou aval 30 dépourvu du premier dispositif de mesure 60. Chaque dispositif de mesure 60, 65 peut comprendre un élément solidarisé à un organe tournant de la chaîne mécanique de transmission de puissance 20, 30 concerné

Selon un exemple le premier paramètre de surveillance et le cas échéant le deuxième paramètre de surveillance sont des vitesses de rotation V de deux organes respectifs. Ainsi, chaque dispositif de mesure 60, 65 peut comporter un capteur 62 apte à émettre un signal par exemple analogique ou numérique, électrique ou optique image d'une vitesse de rotation.

Selon une possibilité illustrée sur la figure 1, chaque dispositif de mesure 60, 65 comporte une roue codeuse 61 solidaire de l'organe tournant à étudier et un senseur 62 usuel en vis-à-vis de la roue codeuse 61, ledit senseur 62 émettant un signal de mesure par exemple analogique ou numérique, électrique ou optique image de la vitesse de rotation de la roue codeuse 61 et de fait dudit organe tournant.

Selon une autre possibilité, chaque dispositif de mesure comporte un accéléromètre mesurant une accélération due au balourd ou à l'engrènement dont la fréquence est image de la vitesse de rotation de la chaîne mécanique de transmission de puissance associée.

Selon un exemple le premier paramètre de surveillance et le cas échéant le deuxième paramètre de surveillance représentent chacun une position angulaire pos d'un organe respectif par rapport à une référence. Ainsi, chaque dispositif de mesure 60, 65 peut comporter un capteur de position apte à émettre un signal par exemple analogique ou numérique, électrique ou optique image d'une position.

Selon un exemple le premier paramètre de surveillance et le cas échéant le deuxième paramètre de surveillance sont des accélérations angulaires acc de deux organes respectifs. Ainsi, chaque dispositif de mesure 60, 65 peut comporter un capteur d'accélération apte à émettre un signal par exemple analogique ou numérique, électrique ou optique image d'une accélération.

Selon un autre exemple, le premier paramètre de surveillance et le cas échéant le deuxième paramètre de surveillance sont des couples mécaniques Tq exercés sur deux organes tournants respectifs. Ainsi, chaque dispositif de mesure 60, 65 comporte un couplemètre usuel solidarisé à l'organe tournant et apte à émettre un signal analogique, numérique, électrique ou optique image d'un couple mécanique.

Selon un autre exemple, le premier paramètre de surveillance et le cas échéant le deuxième paramètre de surveillance sont deux contraintes mécaniques C exercées sur deux organes tournants respectifs. Ainsi, chaque dispositif de mesure 60, 65 comporte une jauge de contrainte usuelle solidarisée à l'organe tournant et apte à émettre un signal analogique, numérique, électrique ou optique image d'une contrainte mécanique.

Lorsque le premier paramètre de surveillance et, le cas échéant, le deuxième paramètre de surveillance ne sont pas du type « vitesse de rotation », le système peut comporter le premier dispositif de mesure 60, voire le deuxième dispositif de mesure 65, plus des capteurs pour mesurer la vitesse de rotation des chaines mécaniques de transmission amont 20 et aval 30.

Par ailleurs, le système de surveillance 50 est muni d'un calculateur de traitement 51 relié par une liaison filaire ou non filaire au premier dispositif de mesure 60 et, le cas échéant, au deuxième dispositif de mesure 65. Le calculateur de traitement 51 peut comprendre un organe exécutant des instructions mémorisées pour appliquer le procédé implémenté. Le calculateur de traitement 51 peut comprendre un unique calculateur ou plusieurs calculateurs. Le ou les calculateurs du calculateur de traitement 51 peuvent comprendre par exemple au moins un processeur et au moins une mémoire, au moins un circuit intégré, au moins un système programmable, au moins un circuit logique, ces exemples ne limitant pas la portée donnée à l'expression « calculateur ». Le terme processeur peut désigner aussi bien une unité centrale de traitement connue sous l'acronyme CPU, une unité graphique de traitement GPU, une unité digitale connue sous l'acronyme DSP, un microcontrôleur...

Selon un autre aspect, le système de surveillance 50 comporte un alerteur 56 coopérant avec le calculateur de traitement 51. L'alerteur 56 peut comprendre un écran d'affichage ou une diode ou équivalent pour générer une alarme visuelle, un système haptique, un système sonore, vibratoire... L'alerteur 56 peut être relié par une liaison filaire ou non filaire au calculateur de traitement 51 ou peut communiquer avec ce calculateur de traitement 51 via des mémoires mobiles stockant des données sous diverses formes.

Chaque dispositif de mesure et/ou un ou plusieurs calculateurs du calculateur de traitement et/ou l'alerteur peuvent faire partie du système mécanique 1 ou peuvent être indépendants du système mécanique 1 en étant éventuellement agencés sur le système mécanique 1 que lors d'une mesure.

La figure 1 illustre un système de surveillance 50 coopérant avec un système mécanique 1 simple.

Néanmoins, l'invention peut être utilisée pour étudier des roues libres agencées au sein de tout type système et éventuellement agencée au sein même d'équipement d'un système mécanique. Ce système mécanique de transmission de puissance 10 peut comporter au moins un arbre de transmission de puissance, au moins une boîte de transmission de puissance, au moins un organe de connexion mécanique, au moins un engrenage, un mât rotor allant d'une boîte de transmission de puissance jusqu'à un rotor ...

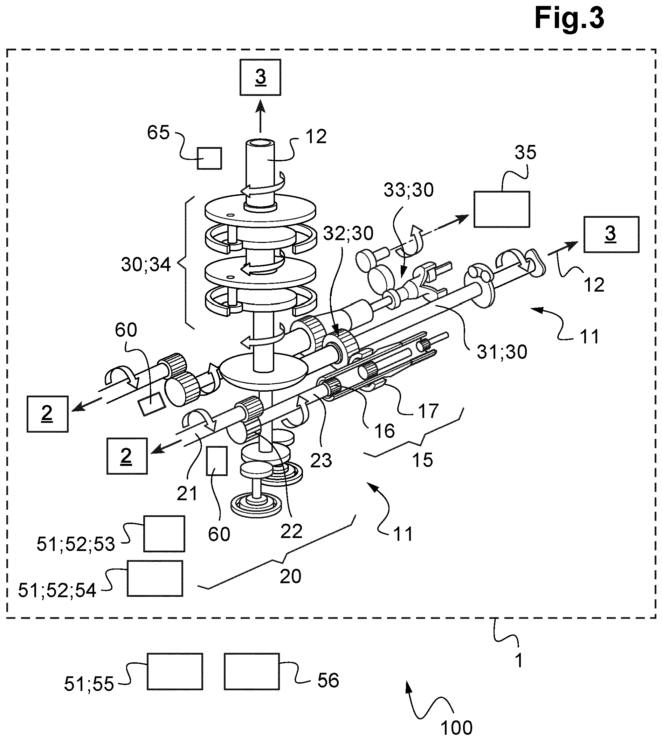

Selon l'exemple des figures 2 et 3, le système mécanique 1 peut être un aéronef. Cet aéronef comprend au moins une partie tournante 3 de type rotor 4 mis en mouvement par au moins un moteur 2, via au moins une roue libre par moteur 2 et éventuellement au moins via une boîte de transmission de puissance 11.

Chaque roue libre 15 est interposée mécaniquement entre un organe tournant d'un moteur 2 et une partie tournante 3. La figure 1 illustre ainsi une installation motrice à un moteur 2 et une roue libre 15 alors que les figures 2 et 3 donnent l'exemple d'une installation motrice ayant deux moteurs 2 et deux roues libres 15 pour mettre en mouvement au moins une partie tournante 3.

Le cas échéant et conformément à l'illustration de la figure 3, chaque roue libre 15 peut être disposée par exemple à l'intérieur d'une boîte de transmission de puissance 11 éventuelle. Alternativement, chaque roue libre 15 peut être disposée en dehors d'une telle boîte de transmission de puissance 11 éventuelle, voire même dans un moteur 2.

Par exemple et en référence à la figure 3, la chaîne mécanique de transmission de puissance amont 20 peut comporter un arbre de sortie 21 du moteur 2, au moins un autre arbre 23, au moins un engrenage 22, ou au moins un organe de liaison mécanique, un ou plusieurs des organes précités pouvant s'étendre dans une boîte de transmission de puissance 11 ou dans le moteur 2.

Selon l'exemple de la figure 3, la chaîne mécanique de transmission de puissance aval 30 peut rejoindre des éléments tournants 35 tels qu'une boîte d'accessoires, une pompe... Par exemple, la chaîne mécanique de transmission de puissance aval 30 comporte un arbre 31, au moins un engrenage 32, au moins un système de réduction de vitesse 34, au moins un mât rotor 12, au moins un organe de liaison mécanique... Un ou plusieurs des organes précités peuvent s'étendre ou non dans la boîte de transmission de puissance 11.

Par ailleurs, chaque dispositif de mesure 60, 65 peut comprendre un élément solidarisé à un organe tournant de la chaîne mécanique de transmission de puissance 20, 30 concerné, en dehors ou dans une boîte de transmission de puissance 11 voire dans le moteur 2. Au sein de la chaîne mécanique de transmission de puissance aval 30, le dispositif de mesure 60, 65 concerné peut être agencé par exemple sur un mât rotor 12 mais peut aussi être agencé sur une portion 33 de la chaîne mécanique de transmission de puissance aval 30 débouchant non pas sur la partie tournante 3 mais sur un équipement annexe 35. Chaque dispositif de mesure 60, 65 peut favorablement être disposé au plus près de la roue libre 15 à surveiller, voire même sur la roue libre 15. En présence de plusieurs roues libres, le système de surveillance 50 peut comporter par exemple un premier dispositif de mesure 60 par roue libre 15, et éventuellement un ou plusieurs deuxièmes dispositifs de mesure 65. Comme illustré sur la figure 3, il est notamment possible d'agencer un unique deuxième dispositif de mesure 65 au niveau d'un organe mis en mouvement par toutes les roues libre 15, un mât rotor 12 par exemple.

En outre et dans le cas d'un système 1 de type aéronef, le ou les calculateurs du calculateur de traitement 51 peuvent tous être embarqués dans l'aéronef 1 ou au moins un calculateur peut se trouver en dehors de l'aéronef 1. La figure 2 illustre un calculateur de traitement 51 entièrement agencé dans l'aéronef 1. La figure 3 illustre au contraire un calculateur de traitement 51 comprenant un premier calculateur 52 agencé dans l'aéronef 1 et un deuxième calculateur 55 déporté en dehors de l'aéronef 1. Par exemple, le premier calculateur 52 comporte un calculateur moteur 53 d'un système FADEC et un calculateur de surveillance 54 d'un système HUMS.

L'alerteur 56 peut être embarqué ou non embarqué dans l'aéronef 1. Par exemple, selon la figure 3, l'alerteur 56 est déporté en dehors de l'aéronef 1 et communique avec le deuxième calculateur 55.

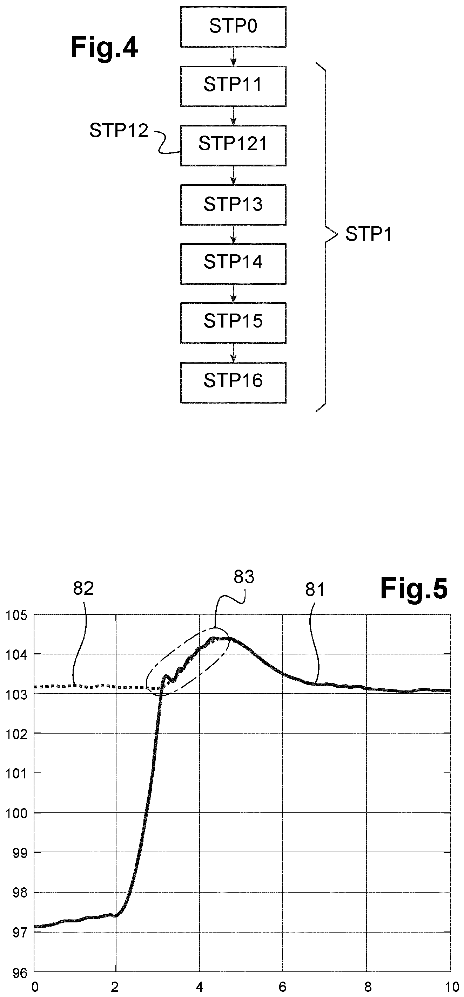

La figure 4 illustre le procédé selon l'invention apte à être mis en œuvre par un système de surveillance 50 pour surveiller l'usure d'une ou plusieurs roues libres 15. Les explications suivantes sont données pour une roue libre 15 mais le procédé est applicable à chaque roue libre 15.

Ce procédé comporte ainsi une phase d'analyse STP1 durant laquelle l'usure d'une roue libre 15 est évaluée.

Préalablement à cette phase d'analyse STP1, le procédé peut comporter une étape STP0 de détection de l'engagement de la roue libre 15. La phase d'analyse STP1 est éventuellement déclenchée uniquement lors de l'engagement ou juste avant ou juste après l'engagement de la roue libre 15.

La figure 5 présente un diagramme comprenant des vitesses de rotation en ordonnée et le temps en abscisse. Une première courbe de vitesse 81 illustre un exemple de la première vitesse de rotation d'un organe tournant de la chaîne de transmission mécanique de puissance amont 20 alors qu'une deuxième courbe de vitesse 82 illustre un exemple de la deuxième vitesse de rotation d'un organe tournant de la chaîne de transmission mécanique de puissance aval 30. La phase d'analyse STP1 est selon une variante réalisée uniquement dans la zone 83 dans laquelle la première courbe de vitesse 81 tend vers la deuxième courbe de vitesse 82. Par exemple, cette phase transitoire débute quand la première vitesse de rotation est égale à la deuxième vitesse de rotation plus ou moins une marge et se termine éventuellement à l'issue d'une durée prédéterminée ou lorsque la première vitesse de rotation est sensiblement égale à la deuxième vitesse de rotation durant un temps prédéterminé.

Indépendamment de la présence ou de l'absence de l'étape STP0 et en référence à la figure 4, le procédé comporte une étape STP11 de mesure voire de stockage au moins de la valeur du premier paramètre de surveillance au sein de la chaîne de transmission mécanique amont 20 ou aval 30 avec le premier dispositif de mesure 60 voire aussi de mesure voire de stockage de la valeur du deuxième paramètre de surveillance au sein de la chaîne de transmission mécanique amont 20 ou aval 30 avec le deuxième dispositif de mesure 65. Par exemple, le calculateur de traitement 51, et selon l'exemple de la figure 3 le calculateur moteur 53, détermine la ou lesdites valeurs en décodant les signaux provenant du premier dispositif de mesure 60, voire aussi du deuxième dispositif de mesure 65.

En outre et en référence à la figure 4, le procédé comporte alors une étape de détermination STP12 d'une mesure d'oscillation.

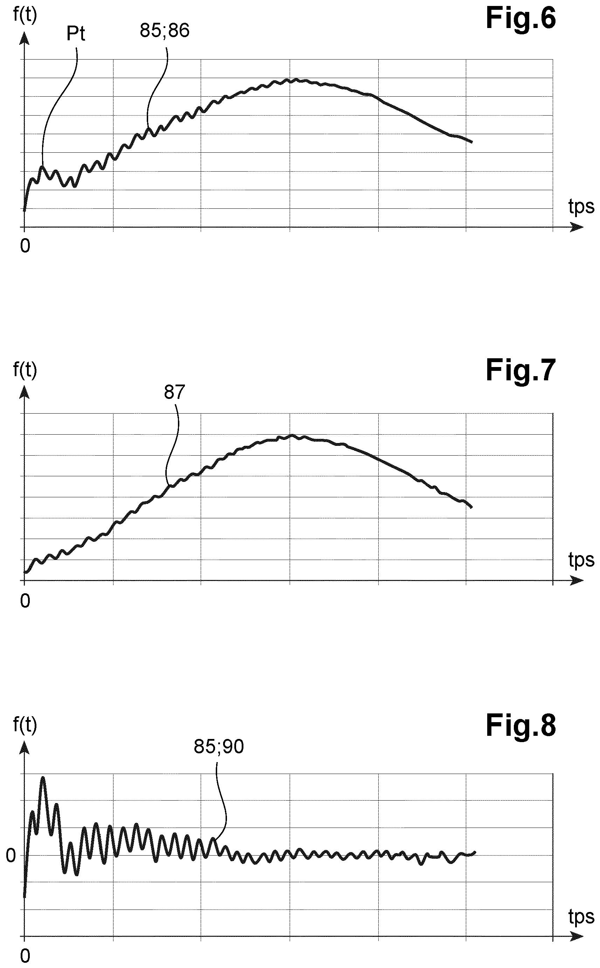

En référence à la figure 6, à l'aide des mesures effectuées, le calculateur de traitement 51 et par exemple le calculateur de surveillance 54 selon la figure 2, établit une mesure d'oscillation 85, représentée par une courbe dans un diagramme présentant le paramètre de surveillance en ordonnée et le temps en abscisse.

Selon une variante illustrée par la figure 6, la mesure d'oscillation 85 prend la forme d'une courbe continue d'une valeur f(t) par rapport au temps tps qui est égale au premier signal de mesure 86 du premier paramètre de surveillance au sein de la chaîne de transmission de puissance amont 20 ou aval 30.

Alternativement, le calculateur de traitement peut échantillonner le premier signal de mesure 86 pour obtenir une succession de points de mesure pt par rapport au temps, ces points de mesure pt faisant par exemple l'objet d'une conversion par la calculateur de traitement. La mesure d'oscillation 85 peut prendre la forme de cette série de points de mesure, éventuellement convertis ou non convertis.

Selon une autre variante illustré sur la figure 7, durant une étape de filtration STP121, le premier signal de mesure est filtré directement ou indirectement par soustraction d'un deuxième signal de mesure 87 du deuxième paramètre de surveillance. Par exemple, la mesure d'oscillation 85 correspond point par point au premier signal de mesure 86 moins le deuxième signal de mesure 87, ou inversement.

La figure 8 illustre une mesure d'oscillation 85 obtenue dans un repère temporel en soustrayant le deuxième signal de mesure de la figure 7 au premier signal de mesure de la figure 6.

Alternativement, le calculateur de traitement peut échantillonner le signal illustré sur la figure 8 pour obtenir une succession de points de mesure par rapport au temps, ces points de mesure faisant par exemple l'objet d'une conversion par le calculateur de traitement. La mesure d'oscillation 85 peut prendre la forme de cette série de points de mesure, éventuellement convertis ou non convertis.

Alternativement, le calculateur de traitement peut échantillonner le premier signal de mesure 86 et le deuxième signal de mesure 87 pour obtenir une succession de points de mesure, ces points de mesure faisant par exemple l'objet d'une conversion par la calculateur de traitement. La mesure d'oscillation 85 peut prendre la forme de la première série de points de mesure, éventuellement convertis ou non convertis, résultant du premier signal de mesure moins la deuxième série de points de mesure résultant du deuxième signal de mesure, éventuellement convertis ou non convertis.

Les exemples précédents sont donnés à titre illustratifs.

En référence à la figure 4, le calculateur de traitement 51 met alors en œuvre une étape de détermination STP13 d'une valeur d'au moins un paramètre dynamique **L,** omg, ft, amp correspondant à une caractéristique de la mesure d'oscillation, directement dans un repère temporel ou indirectement dans un repère fréquentiel par analyse spectrale, transformée de Fourier ou autres.

En référence à la figure 8 par exemple, lorsque la mesure d'oscillation est exprimée dans un repère temporel, le calculateur de traitement 51, et par exemple le calculateur de surveillance 54 selon l'exemple de la figure 2, peut déterminer l'équation d'une fonction mathématique 90 pouvant être sensiblement superposée à la mesure d'oscillation 85, à savoir une fonction mathématique qui est séparée de la mesure d'oscillation par un écart correspondant à une erreur minimisée.

Cette équation de la fonction mathématique 90 peut être stockée dans le calculateur de traitement 51 et peut contenir un ou plusieurs paramètres dynamiques en tant que variables. Un paramètre dynamique peut être une pseudo-pulsation omg ou un coefficient d'amortissement L.

Par exemple, la fonction mathématique 90 est une fonction représentant un oscillateur amorti en torsion et de la forme :

$$V=X*(-L*exp(-L*t)*cos(omg*t+phi)-omg*exp(-L*t)*sin(omg*t+phi))$$

où « V » représente le paramètre de surveillance et par exemple une vitesse de rotation, « t » représente le temps, « X » représente une amplitude, « L » représente un paramètre dynamique de type coefficient d'amortissement, « omg » représente un paramètre dynamique de type pseudo-pulsation, « phi » représente une phase, « exp » représente la fonction exponentielle, « cos » représente la fonction cosinus, « sin » représente la fonction sinus, « = » représente le signe de l'égalité, « * » représente le signe de la multiplication, « + » représente le signe de l'addition, « - » représente le signe de la soustraction

Selon une méthode, la fonction mathématique 90, à savoir son équation, est mémorisée dans le calculateur de traitement 51 et le calculateur de traitement 51 ajuste la valeur de chaque paramètre dynamique pour que la fonction mathématique 90 corresponde à la mesure d'oscillation 85.

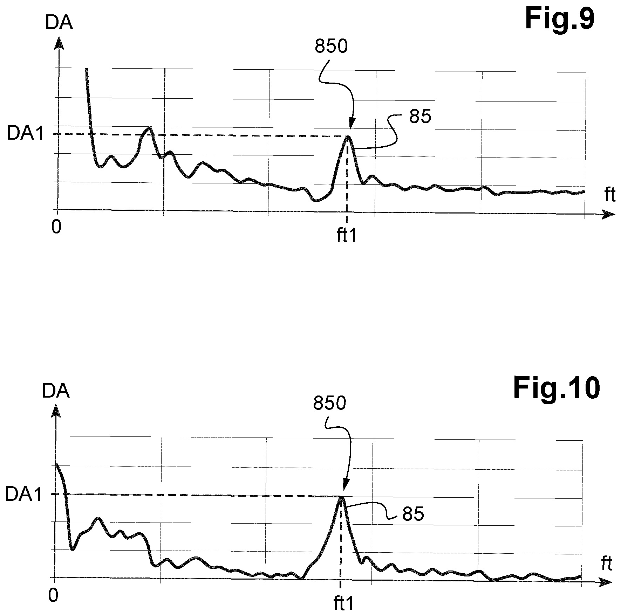

Alternativement, la mesure d'oscillation 85 peut être transformée pour être représentée dans un repère fréquentiel. Les figures 9 et 10 illustrent respectivement la transformée de la mesure d'oscillation des figures 6 et 8 obtenue par transformation de Fourier. Dans le repère fréquentiel, la transformée de la mesure d'oscillation présente une densité d'amplitude DA par rapport à des fréquences ft. Le procédé comporte alors une étape d'identification d'une valeur dudit au moins un paramètre dynamique de cette transformée de la mesure d'oscillation dans le repère fréquentiel.

Au moins un paramètre dynamique peut être une fréquence ft1 ou une densité d'amplitude Da1 d'une raie spectrale 850 prédéterminée de ladite transformée de la mesure d'oscillation dans un repère fréquentiel. Par exemple, cette raie spectrale 850 correspond au pic présent dans une gamme de fréquences prédéterminées. Ainsi un paramètre dynamique peut être une fréquence prenant la valeur ft1 de ce pic et/ou un paramètre dynamique peut être une densité d'amplitude DA1 de ce pic.

Dès lors et en référence à la figure 4, le procédé comporte une étape STP15 de génération, avec l'alerteur 56, d'une alarme lorsque ladite valeur dudit au moins un paramètre dynamique ft, L, omg, amp atteint un seuil d'usure Samp, SL, Somg, Sft.

Par exemple, durant une étape préalable STP14, le calculateur de traitement 51, et par exemple le deuxième calculateur 55 selon l'exemple de la figure 3 compare la valeur de chaque paramètre dynamique à son seuil d'usure.

Selon l'exemple de la figure 8, si la pseudo-pulsation omg atteint un seuil de pseudo-pulsation Somg ou si le coefficient d'amortissement L atteint un seuil d'amortissement SL alors une alarme est émise par l'alerteur 56. Par exemple, dans des conditions normales, la pseudopulsation omg est comprise entre deux seuils prédéterminés, si un de ces deux seuils est atteint alors l'alarme est générée.

Selon les exemples des figures 9 et 10, si la fréquence ft1 atteint un seuil de de fréquence Sft ou si la densité d'amplitude DA1 atteint un seuil de densité d'amplitude alors le calculateur de traitement ordonne à l'alerteur de générer une alarme. Par exemple, dans des conditions normales, la fréquence ft1 est comprise entre deux seuils prédéterminés. Si un de ces deux seuils est atteint alors l'alarme est générée.

Durant l'étape préalable STP14, le calculateur de traitement 51 peut estimer une durée de vie restante de la roue libre 15 en fonction d'une différence entre la valeur de chaque paramètre dynamique ft, amp, L, omg et au moins un seuil d'usure Sft, SL, Somg, Samp. Si la durée de vie est nulle ou négative, une alarme est générée. La durée de vie peut être affichée sur un afficheur et/ou mémorisée.

Si une alarme est générée, une étape de maintenance STP16 peut être déclenchée pour inspecter la roue libre 15 et éventuellement la remplacer.

**Revendications**

1. Procédé de détection d'une usure avant défaillance d'une roue libre (15) d'un système mécanique (1), ledit système mécanique (1) étant muni d'une partie tournante (3) à entraîner en rotation avec un moteur (2), ladite roue libre (15) comprenant une partie menante (16) intégrée à une chaîne mécanique de transmission de puissance amont (20) reliée au moteur (2), ladite roue libre (15) comprenant une partie menée (17) intégrée à une chaîne mécanique de transmission de puissance aval (30) reliée au moins à la partie tournante (3),

   où, pour la détection d'une usure avant défaillance de la roue libre (15), le procédé comporte les étapes suivantes lors d'une phase d'analyse (STP1) :

   - acquisition d'un premier signal de mesure étant caractéristique d'un premier paramètre de surveillance (V, pos, acc, Tq, C) au sein de la chaîne mécanique de transmission de puissance amont (20) ou aval (30) en utilisant un capteur (62) associé à au moins un premier dispositif de mesure (60),
   - détermination, à partir dudit premier signal de mesure, et stockage (STP11) dudit premier paramètre de surveillance (V, pos, acc, Tq, C) en utilisant un calculateur de traitement (51),
   - détermination (STP12) d'une mesure d'oscillation (85) variant en fonction du temps pour ledit premier paramètre de surveillance (V, pos, acc, Tq, C) en utilisant ledit au moins un premier dispositif de mesure (60), ladite oscillation étant dépendante des propriétés mécaniques de la roue libre et par conséquent de son niveau d'usure
   - détermination (STP13) d'une valeur d'au moins un paramètre dynamique (L, omg, ft, amp), avec ledit calculateur de traitement (51), ledit au moins un paramètre dynamique (L, omg, ft, amp) étant une caractéristique de la mesure d'oscillation dans un repère temporel ou une caractéristique d'une transformée de la mesure d'oscillation dans un repère fréquentiel,
   - génération (STP15), avec un alerteur (56) en communication avec le calculateur de traitement (51), d'une alarme de détection de ladite usure avant défaillance lorsque ladite valeur dudit au moins un paramètre dynamique (L, omg, ft, amp) atteint au moins un seuil d'usure (SL, Somg, Sft, Samp) associé audit paramètre dynamique (L, omg, ft, amp) et stocké dans le calculateur de traitement (51).

2. Procédé selon la revendication 1,
   **caractérisé en ce que** ledit au moins un seuil d'usure (Sft, Samp, SL, Somg) est un seuil atteint lorsque ladite roue libre (15) est usée et non glissante.

3. Procédé selon l'une quelconque des revendications 1 à 2,
   **caractérisé en ce que** ledit premier paramètre de surveillance est un paramètre physique de type vitesse de rotation (V), position angulaire (pos), accélération angulaire (acc), couple mécanique (Tq) ou contrainte mécanique (C).

4. Procédé selon l'une quelconque des revendications 1 à 3,
   **caractérisé en ce que** ladite détermination (STP12) d'une mesure d'oscillation (85) comporte l'élaboration d'un premier signal de mesure par rapport au temps avec le premier dispositif de mesure (60), ladite mesure d'oscillation étant :

   - soit une courbe continue par rapport au temps correspondant au premier signal de mesure non filtré,
   - soit une courbe continue par rapport au temps correspondant au premier signal de mesure filtré au moins par soustraction d'un deuxième signal de mesure généré par un deuxième dispositif de mesure (65) mesurant un deuxième paramètre de surveillance au sein de la chaîne mécanique de transmission de puissance amont (20) ou aval (30) ne faisant pas l'objet du premier paramètre de surveillance, le premier paramètre de surveillance et le deuxième paramètre de surveillance étant relatifs à un même paramètre physique.

5. Procédé selon l'une quelconque des revendications 1 à 3,
   **caractérisé en ce que** ladite détermination (STP12) d'une mesure d'oscillation (85) comporte les étapes suivantes :

- élaboration d'un premier signal de mesure par rapport au temps avec le premier dispositif de mesure (60), le premier signal de mesure étant non filtré ou filtré au moins par soustraction d'un deuxième signal de mesure par rapport au temps généré par un deuxième dispositif de mesure (65) mesurant un deuxième paramètre de surveillance au sein de la chaîne mécanique de transmission de puissance amont (20) ou aval (30) ne faisant pas l'objet du premier paramètre de surveillance, le premier paramètre de surveillance et le deuxième paramètre de surveillance étant relatifs à un même paramètre physique,

- génération d'une pluralité de points de mesure par rapport au temps par échantillonnage dudit premier signal de mesure filtré ou non filtré, ladite mesure d'oscillation étant une courbe oscillante discontinue par rapport au temps comprenant lesdits points de mesure.

**6.** Procédé selon l'une quelconque des revendications 1 à 3,
**caractérisé en ce que** ladite détermination (STP12) d'une mesure d'oscillation (85) comporte les étapes suivantes :

- élaboration d'un premier signal de mesure par rapport au temps avec le premier dispositif de mesure (60),
- génération d'une pluralité de premiers points intermédiaires par échantillonnage dudit premier signal de mesure
- élaboration d'un deuxième signal de mesure avec un deuxième dispositif de mesure (65) mesurant un deuxième paramètre de surveillance au sein de la chaîne mécanique de transmission de puissance amont (20) ou aval (30) ne faisant pas l'objet du premier paramètre de surveillance, le premier paramètre de surveillance et le deuxième paramètre de surveillance étant relatifs à un même paramètre physique,
- génération d'une pluralité de deuxièmes points intermédiaires par échantillonnage dudit deuxième signal de mesure,
- génération d'une pluralité de points de mesure par soustraction des premiers points intermédiaires et des deuxièmes points intermédiaires, ladite mesure d'oscillation étant une courbe oscillante discontinue par rapport au temps comprenant lesdits points de mesure.

**7.** Procédé selon l'une quelconque des revendications 1 à 6,
**caractérisé en ce que** ledit au moins un paramètre dynamique comporte une pseudo-pulsation (omg) de ladite mesure d'oscillation, ledit au moins un seuil d'usure associé étant un seuil de pseudopulsation (Somg).

**8.** Procédé selon l'une quelconque des revendications 1 à 7,
**caractérisé en ce que** ledit au moins un paramètre dynamique comporte un coefficient d'amortissement (L) de ladite mesure d'oscillation, ledit au moins un seuil d'usure associé étant un seuil d'amortissement (SL).

**9.** Procédé selon l'une quelconque des revendications 1 à 8,
**caractérisé en ce que** ladite détermination d'une valeur d'au moins un paramètre dynamique (L, omg) dans ledit repère temporel comporte l'étape suivante : ajustement d'une valeur dudit au moins un paramètre dynamique (L, omg) au sein d'une fonction mathématique (90) stockée dans le calculateur de traitement (51) pour que ladite fonction mathématique soit séparée d'une fonction décrite par la mesure d'oscillation par un espace inférieur à un seuil.

**10.** Procédé selon la revendication 9,
**caractérisé en ce que** ledit premier paramètre de surveillance étant une vitesse de rotation, ladite fonction mathématique (90) est de la forme suivante :

$$V=X*(-L*exp(-L*t)*cos(omg*t+phi)-omg*exp(-L*t)*sin(omg*t+phi))$$

où « V » représente une vitesse en ordonnée dans un diagramme présentant le temps t en abscisse, « t » représente le temps, « X » représente une amplitude, « L » représente un paramètre dynamique de type coefficient d'amortissement, « omg » représente un paramètre dynamique de type pseudo-pulsation, « phi » représente une phase, « exp » représente la fonction exponentielle, « cos » représente la fonction cosinus, « sin » représente la fonction sinus, « = » représente le signe de l'égalité, « * » représente le signe de la multiplication, « + » représente le signe de l'addition, « - » représente le signe de la soustraction.

**11.** Procédé selon l'une quelconque des revendications 1 à 8,
**caractérisé en ce que** ladite détermination (STP13) d'une valeur d'au moins un paramètre dynamique dans ledit repère fréquentiel comporte l'étape suivante : identification d'une valeur dudit au moins un paramètre dynamique (ft, amp) de ladite transformée de la mesure d'oscillation dans un repère fréquentiel.

**12.** Procédé selon la revendication 11,
**caractérisé en ce que** ladite transformée de la mesure d'oscillation dans un repère fréquentiel fournissant une densité d'amplitude par rapport à des fréquences, ladite identification d'une valeur d'au moins un paramètre dynamique comporte la détermination au moins d'une fréquence (ft) ou d'une densité d'amplitude (Amp) d'une raie spectrale prédéterminée de ladite transformée de la mesure d'oscillation, ledit au moins un paramètre dynamique étant ladite fréquence ou ladite densité d'amplitude.

**13.** Procédé selon l'une quelconque des revendications 1 à 12,
**caractérisé en ce que** le procédé comporte une étape (STP0) de détermination d'une période d'engagement de la roue libre (15) durant laquelle la partie menante (16) commence à entraîner la partie menée (17), ladite phase d'analyse (STP1) étant initiée lors de ladite période d'engagement.

**14.** Procédé selon l'une quelconque des revendications 1 à 13,
**caractérisé en ce que** ledit procédé comporte une étape (STP14) de détermination d'une durée de vie restante de ladite roue libre (15) en fonction d'une différence entre ladite valeur dudit au moins un paramètre dynamique (L, omg, ft, amp) et ledit au moins un seuil d'usure (SL, Somg, Sft, Sampi) associé.

**15.** Système de surveillance (50) pour détecter une usure avant défaillance d'une roue libre (15) d'un système mécanique (1), ledit système mécanique (1) étant muni d'une partie tournante (3), ladite roue libre (15) comprenant une partie menante (16) intégrée à une chaîne mécanique de transmission de puissance amont (20) reliée à un moteur (2), ladite roue libre (15) comprenant une partie menée (17) intégrée à une chaîne mécanique de transmission de puissance aval (30) reliée au moins à la partie tournante (3),
le système de surveillance (50) comportant un premier dispositif de mesure (60) pour mesurer ledit premier paramètre de surveillance (V, pos, acc, Tq, C) au sein de la chaîne mécanique de transmission de puissance amont (20) ou aval (30) en position de montage, ledit système de surveillance (50) ayant un calculateur de traitement (51), le système de surveillance (50) étant **caractérisé en ce que** ledit calculateur de traitement (51) est configuré pour appliquer le procédé selon l'une quelconque des revendications 1 à 14, et **en ce que** ledit calculateur de traitement (51) est relié en position de montage à un alerteur (56) pour générer une alarme de détection de ladite usure avant défaillance ainsi qu'au premier dispositif de mesure (60).

**16.** Système de surveillance selon la revendication 15,
**caractérisé en ce que** ce système de surveillance (50) comporte un deuxième dispositif de mesure (65) pour mesurer en position de montage un deuxième paramètre de surveillance (V, pos, acc, Tq, C) au sein de la chaîne mécanique de transmission de puissance amont (20) ou aval (30) ne faisant pas l'objet du premier paramètre de surveillance, ledit calculateur de traitement (51) étant relié en position de montage audit deuxième dispositif de mesure (65).

**17.** Appareil (100) comprenant un aéronef (1) muni d'une partie tournante (3) comprenant un rotor (4) et d'au moins une roue libre (15), ladite roue libre (15) comprenant une partie menante (16) intégrée à une chaîne mécanique de transmission de puissance amont (20) reliée à un moteur (2), ladite roue libre (15) comprenant une partie menée (17) intégrée à une chaîne mécanique de transmission de puissance aval (30) reliée au moins à la partie tournante (3),
**caractérisé en ce que** ledit appareil (100) est muni d'un système de surveillance (50) selon l'une quelconque des revendications 15 à 16.

**18.** Appareil selon la revendication 17,
**caractérisé en ce qu'**au moins ledit calculateur de traitement (51) ou ledit alerteur est embarqué dans l'aéronef (1).

**19.** Appareil selon la revendication 17,
**caractérisé en ce que** ledit calculateur de traitement (51) comporte :

- un premier calculateur (52) embarqué dans ledit aéronef (1), le premier calculateur (52) étant relié au premier dispositif de mesure (60) et étant configuré pour réaliser ladite détermination d'une valeur d'au moins un paramètre dynamique (L, omg, ft, amp),
- un deuxième calculateur (55) non embarqué dans l'aéronef (1) communiquant avec le premier calculateur (52) et l'alerteur (56), ledit deuxième calculateur (55) étant configuré pour réaliser ladite génération d'une alarme lorsque ladite valeur dudit au moins un paramètre dynamique (L, omg, ft, amp) atteint au moins un seuil d'usure (SL, Somg, Sft, Samp) associé audit au moins un paramètre dynamique et stocké dans le calculateur de traitement (51).

**Patentansprüche**

1. Verfahren zum Erkennen von Verschleiß vor dem Ausfall eines Freilaufs (15) eines mechanischen Systems (1), wobei das mechanische System (1) ein drehbares Teil (3) aufweist, das durch einen Motor (2) drehantreibbar ist, wobei der Freilauf (15) einen Antriebsteil (16) umfasst, der in einen mit dem Motor (2) verbundenen stromaufwärtigen mechanischen Antriebsstrang (20) integriert ist, und der Freilauf (15) einen angetriebenen Teil (17) umfasst, der in einen mindestens mit dem drehbaren Teil (3) verbundenen stromabwärtigen mechanischen Antriebsstrang (30) integriert ist,
   wobei zum Erkennen von Verschleiß vor Ausfall des Freilaufs (15) das Verfahren in einer Analysephase (STP1) die folgenden Schritte umfasst:

   - Erfassen eines für einen ersten Überwachungsparameter (V, pos, acc, Tq, C) innerhalb des stromaufwärtigen (20) oder stromabwärtigen (30) mechanischen Antriebsstrangs charakteristischen ersten Messsignals unter Verwendung eines Sensors (62), der mindestens einer ersten Messvorrichtung (60) zugeordnet ist,
   - Bestimmen des ersten Überwachungsparameters (V, pos, acc, Tq, C) anhand des ersten Messsignals und Speichern (STP11) desselben unter Verwendung eines Verarbeitungsrechners (51),
   - Bestimmen (STP12) einer zeitabhängigen Schwingungsmessung (85) für den ersten Überwachungsparameter (V, pos, acc, Tq, C) unter Verwendung der mindestens einen ersten Messvorrichtung (60), wobei die Schwingung von den mechanischen Eigenschaften des Freilaufs und damit von seinem Verschleißgrad abhängt,
   - Bestimmen (STP13) eines Wertes mindestens eines dynamischen Parameters (L, omg, ft, amp) mit dem Verarbeitungsrechner (51), wobei der mindestens eine dynamische Parameter (L, omg, ft, amp) eine Kennlinie der Schwingungsmessung in einem Zeitreferenzsystem oder eine Kennlinie einer Transformierten der Schwingungsmessung in einem Frequenzreferenzsystem ist,
   - Erzeugen (STP15) eines Vor-Ausfall-Verschleißerkennungsalarms mit einem mit dem Verarbeitungsrechner (51) kommunizierenden Alarmgeber (56), wenn der Wert des mindestens einen dynamischen Parameters (L, omg, ft, amp) mindestens einen Verschleißschwellenwert (SL, Somg, Sft, Samp) erreicht, der dem dynamischen Parameter (L, omg, ft, amp) zugeordnet und im Verarbeitungsrechner (51) gespeichert ist.

2. Verfahren nach Anspruch 1,
   **dadurch gekennzeichnet, dass** der mindestens eine Verschleißschwellenwert (Sft, Samp, SL, Somg) ein Schwellenwert ist, der erreicht wird, wenn der Freilauf (15) verschlissen und nicht rutschend ist.

3. Verfahren nach einem der Ansprüche 1 bis 2,
   **dadurch gekennzeichnet, dass** der erste Überwachungsparameter ein physikalischer Parameter vom Typ Drehzahl (V), Winkelposition (pos), Winkelbeschleunigung (acc), mechanisches Drehmoment (Tq) oder mechanische Belastung (C) ist.

4. Verfahren nach einem der Ansprüche 1 bis 3,
   **dadurch gekennzeichnet, dass** das Bestimmen (STP12) einer Schwingungsmessung (85) das Erzeugen eines ersten zeitabhängigen Messsignals mit der ersten Messvorrichtung (60) umfasst, wobei die Schwingungsmessung:

   - entweder eine dem ersten ungefilterten Messsignal entsprechende kontinuierliche zeitabhängige Kurve,
   - oder eine zeitlich kontinuierliche Kurve ist, die dem ersten Messsignal entspricht, das mindestens durch Subtraktion eines zweiten Messsignals gefiltert wurde, das von einer zweiten Messvorrichtung (65) erzeugt wurde, die einen zweiten Überwachungsparameter innerhalb des stromaufwärtigen (20) oder stromabwärtigen (30) mechanischen Antriebsstrangs misst, der nicht Gegenstand des ersten Überwachungsparameters ist, wobei der erste Überwachungsparameter und der zweite Überwachungsparameter sich auf denselben physikalischen Parameter beziehen.

5. Verfahren nach einem der Ansprüche 1 bis 3,
   **dadurch gekennzeichnet, dass** das Bestimmen (STP12) einer Schwingungsmessung (85) die folgenden Schritte umfasst:

   - Erzeugen eines ersten zeitabhängigen Messsignals mit der ersten Messvorrichtung (60), wobei das erste Messsignal ungefiltert oder zumindest durch Subtraktion eines zweiten zeitabhängigen Messsignals gefiltert ist, das von einer zweiten Messvorrichtung (65) erzeugt wird, die einen zweiten Überwachungsparameter innerhalb des stromaufwärtigen (20) oder stromabwärtigen (30) mechanischen Antriebsstrangs misst, der nicht Gegenstand des ersten Überwachungsparameters ist, wobei der erste Überwachungsparameter und der zweite Überwachungsparameter sich auf denselben physikalischen Parameter beziehen,
- Erzeugen einer Mehrzahl von zeitabhängigen Messpunkten durch Abtasten des gefilterten oder ungefilterten ersten Messsignals, wobei die Schwingungsmessung eine zeitlich diskontinuierliche Schwingungskurve ist, die die Messpunkte umfasst.

6. Verfahren nach einem der Ansprüche 1 bis 3,
**dadurch gekennzeichnet, dass** das Bestimmen (STP12) einer Schwingungsmessung (85) die folgenden Schritte umfasst:

- Erstellen eines ersten zeitabhängigen Messsignals mit der ersten Messvorrichtung (60),
- Erzeugen einer Mehrzahl von ersten Zwischenpunkten durch Abtasten des ersten Messsignals,
- Erstellen eines zweiten Messsignals mit einer zweiten Messvorrichtung (65), die einen zweiten Überwachungsparameter innerhalb des stromaufwärtigen (20) oder stromabwärtigen (30) mechanischen Antriebsstrangs misst, der nicht Gegenstand des ersten Überwachungsparameters ist, wobei der erste Überwachungsparameter und der zweite Überwachungsparameter sich auf denselben physikalischen Parameter beziehen,
- Erzeugen einer Mehrzahl von zweiten Zwischenpunkten durch Abtasten des zweiten Messsignals,
- Erzeugen einer Mehrzahl von Messpunkten durch Subtrahieren der ersten Zwischenpunkte und der zweiten Zwischenpunkte, wobei die Schwingungsmessung eine zeitlich diskontinuierliche Schwingungskurve ist, die die Messpunkte umfasst.

7. Verfahren nach einem der Ansprüche 1 bis 6,
**dadurch gekennzeichnet, dass** der mindestens eine dynamische Parameter eine Pseudopulsation (omg) der Schwingungsmessung umfasst, und dass der mindestens eine zugehörige Verschleißschwellenwert ein Pseudopulsationsschwellenwert (Somg) ist.

8. Verfahren nach einem der Ansprüche 1 bis 7,
**dadurch gekennzeichnet, dass** der mindestens eine dynamische Parameter einen Dämpfungskoeffizienten (L) der Schwingungsmessung umfasst, und dass der mindestens eine zugehörige Verschleißschwellenwert ein Dämpfungsschwellenwert (SL) ist.

9. Verfahren nach einem der Ansprüche 1 bis 8,
**dadurch gekennzeichnet, dass** das Bestimmen eines Wertes mindestens eines dynamischen Parameters (L, omg) im Zeitreferenzsystem den folgenden Schritt umfasst: Anpassen eines Wertes des mindestens einen dynamischen Parameters (L, omg) einer im Verarbeitungsrechner (51) gespeicherten mathematischen Funktion (90), so dass die mathematische Funktion von einer durch die Schwingungsmessung beschriebenen Funktion um einen Abstand getrennt ist, der kleiner als ein Schwellenwert ist.

10. Verfahren nach Anspruch 9,
**dadurch gekennzeichnet, dass** der erste Überwachungsparameter eine Drehgeschwindigkeit ist und die mathematische Funktion (90) die folgende Form hat:

$$V=X*(-L*exp(-L*t)*cos(omg*t+phi)-omg*exp(-L*t)*sin(omg*t+phi))$$

wobei "V" für eine Geschwindigkeit auf der Ordinate in einem Diagramm steht, in dem die Zeit t auf der Abszisse dargestellt ist, "t" für die Zeit steht, "X" für eine Amplitude steht, "L" für einen dynamischen Parameter vom Typ Dämpfungskoeffizient steht, "omg" für einen dynamischen Parameter vom Typ Pseudopulsation steht, "phi" für eine Phase steht, "exp" für die Exponentialfunktion steht, "cos" für die Kosinusfunktion steht, "sin" für die Sinusfunktion steht, "=" für das Gleichheitszeichen steht, "*" für das Multiplikationszeichen steht, "+" für das Additionszeichen steht, "-" für das Subtraktionszeichen steht.

11. Verfahren nach einem der Ansprüche 1 bis 8,
**dadurch gekennzeichnet, dass** das Bestimmen (STP13) eines Wertes mindestens eines dynamischen Parameters in dem Frequenzreferenzsystem den folgenden Schritt umfasst: Identifizieren eines Wertes des mindestens einen dynamischen Parameters (ft, amp) der Transformation der Schwingungsmessung in einem Frequenzreferenzsystem.

12. Verfahren nach Anspruch 11,

**dadurch gekennzeichnet, dass** die Transformierte der Schwingungsmessung in einem Frequenzreferenzsystem eine Amplitudendichte in Bezug auf Frequenzen liefert, wobei die Identifizierung eines Wertes des mindestens einen dynamischen Parameters die Bestimmung mindestens einer Frequenz (ft) oder einer Amplitudendichte (Amp) einer vorgegebenen Spektrallinie der Transformierten der Schwingungsmessung umfasst, wobei der mindestens eine dynamische Parameter die Frequenz oder die Amplitudendichte ist.

13. Verfahren nach einem der Ansprüche 1 bis 12,
    **dadurch gekennzeichnet, dass** das Verfahren einen Schritt (STPO) des Bestimmens einer Eingriffsperiode des Freilaufs (15) umfasst, in der der antreibende Teil (16) beginnt, den angetriebenen Teil (17) anzutreiben, und dass die Analysephase (STP1) zu Beginn dieser Eingriffsperiode eingeleitet wird.

14. Verfahren nach einem der Ansprüche 1 bis 13,
    **dadurch gekennzeichnet, dass** das Verfahren einen Schritt (STP14) des Bestimmens einer Restlebensdauer des Freilaufs (15) in Abhängigkeit von einer Differenz zwischen dem Wert des mindestens einen dynamischen Parameters (L, omg, ft, amp) und dem mindestens einen zugehörigen Verschleißschwellenwert (SL, Somg, Sft, Sampi) umfasst.

15. Überwachungssystem (50) zum Erfassen von Verschleiß vor dem Ausfall eines Freilaufs (15) eines mechanischen Systems (1), wobei das mechanische System (1) ein drehbares Teil (3) aufweist, wobei der Freilauf (15) einen Antriebsteil (16) umfasst, der in einen mit einem Motor (2) verbundenen stromaufwärts gelegenen mechanischen Antriebsstrang (20) integriert ist, und der Freilauf (15) einen angetriebenen Teil (17) umfasst, der in einen mindestens mit dem drehbaren Teil (3) verbundenen stromabwärts gelegenen mechanischen Antriebsstrang (30) integriert ist, wobei das Überwachungssystem (50) eine erste Messvorrichtung (60) zum Messen des ersten Überwachungsparameters (V, pos, acc, Tq, C) innerhalb des mechanischen Antriebsstrangs (20) in der Einbaulage aufweist, wobei das Überwachungssystem (50) einen Verarbeitungsrechner (51) aufweist, wobei das Überwachungssystem (50) **dadurch gekennzeichnet ist, dass** der Verarbeitungsrechner (51) konfiguriert ist, um das Verfahren nach einem der Ansprüche 1 bis 14 anzuwenden, und dass der Verarbeitungsrechner (51) in Einbaulage mit einem Alarmgeber (56), um einen Vor-Ausfall-Verschleißerkennungsalarm zu erzeugen, sowie mit der ersten Messvorrichtung (60) verbunden ist.

16. Überwachungssystem nach Anspruch 15,
    **dadurch gekennzeichnet, dass** das Überwachungssystem (50) eine zweite Messvorrichtung (65) umfasst, um in einer Einbaulage einen zweiten Überwachungsparameter (V, pos, acc, Tq, C) innerhalb des stromaufwärtigen (20) oder stromabwärtigen (30) mechanischen Antriebsstrangs zu messen, der nicht Gegenstand des ersten Überwachungsparameters ist, wobei der Verarbeitungsrechner (51) in seiner Einbaulage mit der zweiten Messvorrichtung (65) verbunden ist.

17. Vorrichtung (100) mit einem Luftfahrzeug (1), das ein drehbares Teil (3) mit einem Rotor (4) und mindestens einen Freilauf (15) aufweist, wobei der Freilauf (15) einen Antriebsteil (16) umfasst, der in einen mit einem Motor (2) verbundenen stromaufwärts gelegenen mechanischen Antriebsstrang (20) integriert ist, und der Freilauf (15) einen angetriebenen Teil (17) umfasst, der in einen mindestens mit dem drehbaren Teil (3) verbundenen stromabwärts gelegenen mechanischen Antriebsstrang (30) integriert ist,
    **dadurch gekennzeichnet, dass** die Vorrichtung (100) ein Überwachungssystem (50) gemäß einem der Ansprüche 15 bis 16 aufweist.

18. Vorrichtung nach Anspruch 17,
    **dadurch gekennzeichnet, dass** zumindest der Verarbeitungsrechner (51) oder der Alarmgeber in dem Luftfahrzeug (1) mitgeführt ist.

19. Vorrichtung nach Anspruch 17,
    **dadurch gekennzeichnet, dass** der Verarbeitungsrechner (51) umfasst:

    - einen ersten Rechner (52), der in dem Luftfahrzeug (1) mitgeführt wird, wobei der erste Rechner (52) mit der ersten Messvorrichtung (60) verbunden und konfiguriert ist, um die Bestimmung eines Wertes mindestens eines dynamischen Parameters (L, omg, ft, amp) durchzuführen,
    - einen zweiten Rechner (55), der nicht in dem Luftfahrzeug (1) mitgeführt wird und mit dem ersten Rechner (52) und dem Alarmgeber (56) kommuniziert, wobei der zweite Rechner (55) konfiguriert ist, um die Erzeugung eines Alarms durchzuführen, wenn der Wert des mindestens einen dynamischen Parameters (L, omg, ft, amp) mindestens einen Verschleißschwellenwert (SL, Somg, Sft, Samp) erreicht, der dem mindestens einen dynamischen Parameter zugeordnet und im Verarbeitungsrechner (51) gespeichert ist.

**Claims**

1. A method for detecting wear before failure of a free-wheel (15) of a mechanical system (1), said mechanical system (1) being provided with a rotating part (3) to be rotated with an engine (2), said free-wheel (15) comprising a driving part (16) integrated into an upstream mechanical power transmission system (20) connected to the engine (2), said free-wheel (15) comprising a driven part (17) integrated into a downstream mechanical power transmission system (30) connected at least to the rotating part (3);
   where, to detect wear before failure of the free-wheel (15), the method comprises the following steps during an analysis phase (STP1):

   - acquiring a first measurement signal characteristic of a first monitoring parameter (V, pos, acc, Tq, C) within the upstream (20) or downstream (30) mechanical power transmission system by using a sensor (62) associated with at last one first measuring device (60),
   - determining, from said first measurement signal, and storing (STP11) said first monitoring parameter, (V, pos, acc, Tq, C) using a processing calculator (51),
   - determining (STP12) an oscillation measurement (85) varying as a function of time for said first monitoring parameter (V, pos, acc, Tq, C) using said at least one first measuring device (60), said oscillation being dependent on the mechanical properties of the free-wheel, and therefore its level of wear,
   - determining (STP13) a value of at least one dynamic parameter (L, omg, ft, amp), with said processing computer (51), said at least one dynamic parameter (L, omg, ft, amp) being a characteristic of the oscillation measurement in a time reference frame or a characteristic of a transform of the oscillation measurement in a frequency reference frame,
   - generating (STP15), with an alerter (56) in communication with the processing computer (51), an alarm for detecting said wear before failure when said value of said at least one dynamic parameter (L, omg, ft, amp) reaches at least a wear threshold (SL, Somg, Sft, Samp) associated with said at least one dynamic parameter (L, omg, ft, amp) and stored in the processing computer (51).

2. Method according to claim 1,
   **characterised in that** said at least one wear threshold (Sft, Samp, SL, Somg) is a threshold reached when the free-wheel (15) is worn and not slipping.

3. Method according to any one of claims 1 to 2,
   **characterised in that** said first monitoring parameter is a physical parameter such as speed of rotation (V), angular position (pos), angular acceleration (acc), mechanical torque (Tq) or mechanical stress (C).

4. Method according to any one of claims 1 to 3,
   **characterised in that** said determination (STP12) of an oscillation measurement (85) comprises producing a first measurement signal as a function of time with the first measuring device (60), said oscillation measurement being:

   - either a continuous curve as a function of time corresponding to the first unfiltered measurement signal;
   - or a continuous curve as a function of time corresponding to the first measurement signal filtered at least by subtracting a second measurement signal generated by a second measuring device (65) measuring a second monitoring parameter within the upstream (20) or downstream (30) mechanical power transmission system which is not the subject of the first monitoring parameter, the first monitoring parameter and the second monitoring parameter being relative to the same physical parameter.

5. Method according to any one of claims 1 to 3,
   **characterised in that** said determination (STP12) of an oscillation measurement (85) comprises the following steps:

   - producing a first measurement signal as a function of time with the first measuring device (60), the first measurement signal being unfiltered or filtered at least by subtracting a second measurement signal as a function of time generated by a second measuring device (65) measuring a second monitoring parameter within the upstream (20) or downstream (30) mechanical power transmission system which is not the subject of the first monitoring parameter, the first monitoring parameter and the second monitoring parameter being relative to the same physical parameter,
- generating a plurality of measurement points as a function of time by sampling said filtered or unfiltered first measurement signal, said oscillation measurement being a discontinuous oscillation curve as a function of time comprising said measurement points.

6. Method according to any one of claims 1 to 3,
   **characterised in that** said determination (STP12) of an oscillation measurement (85) comprises the following steps:

   - producing a first measurement signal as a function of time with the first measuring device (60),
   - generating a plurality of first intermediate points by sampling said first measurement signal,
   - producing a second measurement signal with a second measuring device (65) measuring a second monitoring parameter within the upstream (20) or downstream (30) mechanical power transmission system which is not the subject of the first monitoring parameter, the first monitoring parameter and the second monitoring parameter being relative to the same physical parameter;
   - generating a plurality of second intermediate points by sampling said second measurement signal,
   - generating a plurality of measurement points by subtracting the first intermediate points and the second intermediate points, said oscillation measurement being a discontinuous oscillating curve as a function of time comprising said measurement points.

7. Method according to any one of claims 1 to 6,
   **characterised in that** said at least one dynamic parameter comprises a pseudo-pulse (omg) of said oscillation measurement, said at least one associated free-wheel wear threshold being a pseudo-pulse threshold (Somg).

8. Method according to any one of claims 1 to 7,
   **characterised in that** said at least one dynamic parameter comprises a damping coefficient (L) of said oscillation measurement, said at least one associated free-wheel wear threshold being a damping threshold (SL).

9. Method according to any one of claims 1 to 8,
   **characterised in that** said determination of a value of at least one dynamic parameter (L, omg) in said time reference frame comprises the following step: adjusting a value of said at least one dynamic parameter (L, omg) within a mathematical function (90) stored in the processing computer (51) so that said mathematical function is separated from a function described by the oscillation measurement by a space less than a threshold.

10. Method according to claim 9,
    **characterised in that** said first monitoring parameter being a speed of rotation, said mathematical function (90) is of the following form:

$$V=X*(-L*exp(-L*t)*cos(omg*t+phi)-omg*exp(-L*t)*sin(omg*t+phi))$$

where "V" represents a speed on the ordinate in a graph showing time t on the abscissa, "t" represents time, "X" represents an amplitude, "L" represents a dynamic parameter of the damping coefficient type, "omg" represents a dynamic parameter of the pseudo-pulse type, "phi" represents a phase, "exp" represents the exponential function, "cos" represents the cosine function, "sin" represents the sine function, "=" represents the equals sign, "*" represents the multiplication sign, "+" represents the addition sign, "-" represents the subtraction sign.

11. Method according to any one of claims 1 to 8,
    **characterised in that** said determination (STP13) of a value of at least one dynamic parameter in said frequency reference frame comprises the following step: identifying a value of said at least one dynamic parameter (ft, amp) of said transform of the oscillation measurement in a frequency reference frame.

12. Method according to claim 11,
    **characterised in that** said transform of the oscillation measurement in a frequency reference frame providing an amplitude density as a function of frequencies, said identification of a value of at least one dynamic parameter comprises the determination at least of one frequency (ft) or of one amplitude density (Amp) of a predetermined spectral line of said transform of the oscillation measurement, said at least one dynamic parameter being said frequency or said amplitude density.

13. Method according to any one of claims 1 to 12,
**characterised in that** the method comprises a step (STP0) of determining an engagement period of the free-wheel (15) during which the driving part (16) begins to drive the driven part (17), the analysis phase (STP1) being initiated during the engagement period.

14. Method according to any one of claims 1 to 13,
**characterised in that** said method comprises a step (STP14) of determining a remaining service life of said free-wheel (15) as a function of a difference between said value of said at least one dynamic parameter (L, omg, ft, amp) and said associated wear threshold (SL, Somg, Sft, Sampi).

15. Monitoring system (50) for detecting wear before failure of a free-wheel (15) of a mechanical system (1), said mechanical system (1) being provided with a rotating part (3), said free-wheel (15) comprising a driving part (16) integrated into an upstream mechanical power transmission system (20) connected to an engine (2), said free-wheel (15) comprising a driven part (17) integrated into a downstream mechanical power transmission system (30) connected at least to the rotating part (3),
the monitoring system (50) comprising a first measuring device (60) for measuring said first monitoring parameter (V, pos, acc, Tq, C) within the upstream (20) or downstream (30) mechanical power transmission system in the mounted position, said monitoring system (50) having a processing computer (51), the monitoring system (50) being **characterised in that** said processing computer (51) is configured to apply the method according to any one of claims 1 to 14, and **in that** said processing computer (51) is connected in the mounting position to an alerter (56) to generate an alarm detecting said wear before failure as well as a first measuring device (60).

16. Monitoring system according to claim 15,
**characterised in that** this monitoring system (50) comprises a second measuring device (65) for measuring, in the mounted position, a second monitoring parameter (V, pos, acc, Tq, C) within the upstream (20) or downstream (30) mechanical power transmission system which is not the subject of the first monitoring parameter, said processing computer (51) being connected in the mounted position to said second measuring device (65).

17. Apparatus (100) comprising an aircraft (1) provided with a rotating part (3) comprising a rotor (4) and at least one free-wheel (15), said free-wheel (15) comprising a driving part (16) integrated into the upstream mechanical power transmission system (20) connected to an engine (2), said free-wheel (15) comprising a driven part (17) integrated into a downstream mechanical power transmission system (30) connected at least to the rotating part (3),
**characterised in that** said apparatus (100) is provided with a monitoring system (50) according to any one of claims 15 to 16.

18. Apparatus according to claim 17,
**characterised in that** at least said processing computer (51) or said alerter is embedded on the aircraft (1).

19. Apparatus according to claim 17,
**characterised in that** said processing computer (51) comprises:

- a first computer (52) embedded on said aircraft (1), the first computer (52) being connected to the first measuring device (60) and being configured to carry out said determination of a value of at least one dynamic parameter (L, omg, ft, amp),
- a second computer (55) not embedded on the aircraft (1) communicating with the first computer (52) and the alerter (56), said second computer (55) being configured to carry out said generation of an alarm when said value of said at least one dynamic parameter (L, omg, ft, amp) reaches at least one wear threshold (SL, Somg, Sft, Samp) associated with said at least one dynamic parameter and stored in the processing computer (51).

**Fig.1**

**Fig.2**

**Fig.3**

**Fig.4**

STP0

STP11

STP12 STP121

STP13

STP14

STP15

STP16

STP1

82    83    81    **Fig.5**

**Fig.6**

**Fig.7**

**Fig.8**

**Fig.9**

**Fig.10**

**RÉFÉRENCES CITÉES DANS LA DESCRIPTION**

**Documents brevets cités dans la description**

- FR 3049036
- EP 3473805 A
- WO 9527183 A
- US 2015367951 A

**Littérature non-brevet citée dans la description**

- *USAAMRDL-TR-77-18 HELICOPTER FREEWHEEL UNIT DESIGN GUIDE*, 31 October 1977, 1-240